# EUROPÄISCHE PATENTANMELDUNG

(11) **EP 1 114 687 A2**
(43) Veröffentlichungstag der Anmeldung: **11.07.2001**
(21) Anmeldenummer: 00125737.7
(22) Anmeldetag: 24.11.2000
(51) Int. Cl.: B23G 1/46

(54) **Direkt geschalteter Gewindeschneidapparat mit Drehrichtungsumkehr**

(30) Priorität: 05.01.2000 DE 10000172
(71) Anmelder: Emuge-Werk Richard Glimpel Fabrik für Präzisionswerkzeuge (vormals Moschkau & Glimpel), D-91207 Lauf (DE)
(72) Erfinder: Glimpel, Helmut, Dipl.-Ing., 91207 Lauf (DE); Liebald, Peter, 91161 Hilpostein (DE); Kazda, Thomas, 91235 Hartenstein (DE); Porath, Rainer, 90562 Heroldsberg (DE)
(74) Vertreter: Matschkur, Peter

(57) **Zusammenfassung**

Gewindeschneidapparat mit Drehrichtungsumkehr und einem Planetengetriebe, bei dem die Drehrichtung eines im Spannkopf einer gegen eine Längenausgleichsfeder ausziehbaren Spindel gehalterten Bohrers nach Erreichen einer vorgegebenen Bohrtiefe über einen Pneumatikzylinder umgeschaltet wird, der von einem über ein Stellglied erzeugten Umschaltsignal betätigbar ist, wobei am bzw. im Gehäuse des Gewindeschneidapparats ein elektro-pneumatisches Ventil zur Betätigung des Pneumatikzylinders angeordnet ist, und das das Ventil ansteuernde Stellglied ein am Gehäuse befestigter Sensor zur direkten Erfassung des Spindelauszugs ist.

## Beschreibung

Die Erfindung bezieht sich auf einen Gewindeschneidapparat mit Drehrichtungsumkehr und einem Planetengetriebe, bei dem die Drehrichtung eines im Spannkopf einer gegen eine Längenausgleichsfeder ausziehbaren Spindel gehalterten Bohrers nach Erreichen einer vorgegebenen Bohrtiefe über einen Pneumatikzylinder umgeschaltet wird, der von einem über ein Stellglied erzeugten Umschaltsignal betätigbar ist.

Bei Gewindeschneidapparaten mit Drehrichtungsumkehr und Planetengetriebe ist bisher der Aufbau grundsätzlich so getroffen, dass der Gewindebohrer die Schaltbewegung um Reversieren veranlasst. Beim Erreichen der Gewindeendtiefe wird das Futter über die gesteuerte Vorschubeinheit zurückgefahren. Dabei wird der Bohrer ausgezogen und dieser Auszugsweg ist der Schaltweg für das Getriebe. Dieser Auszugsweg stellt dabei einen für das freie Fahren des Bohrers notwendigen, aber ansonsten unnötigen Maschinenweg dar. Dieses dadurch verursachte "Luftschneiden" von ca. 6 bis 10 mm vor Erreichen des Werkstücks verlängert den Gewindebohrzyklus und damit die Effektivität des gesamten Fertigungsprozesses.

Die erreichbare Gewindetiefengenauigkeit ist bei den gängigen Gewindeschneidapparaten noch dadurch verschlechtert, dass die NC-Maschine bei exaktem Tiefenmaß schaltet, möglicherweise aber das Schaltglied infolge ungünstiger Stellung, z. B. Umschaltkugel befindet sich auf einer Nocke des Schaltgliedes, nicht sofort einrasten kann. Die Ungenauigkeit hängt dabei von der Härte der Längenausgleichsfeder ab, die die Umschalteinrichtung mit der Futterabtriebswelle verbindet. Eine höhere Federhärte erhöht die erreichbare Gewindetiefengenauigkeit, führt aber auf der anderen Seite wieder dazu, dass speziell bei kleineren Bohrergrößen die daraus resultierende hohe Rückzugskraft zu einer erhöhten Flankenreibung am Gewindebohrer und dadurch zu Standzeitverlust und der Gefahr einer Beschädigung des Gewindes führt.

Um diese Schwierigkeiten zu vermeiden ist auch bereits ein Gewindeschneidapparat der eingangs genannten Art vorgeschlagen worden, bei welchem die Umschalteinrichtung durch ein externes Antriebsglied, vorzugsweise einen Pneumatikzylinder betätigt wird, das von einem über ein Stellglied erzeugten Umschaltsignal betätigbar ist. Dabei wird das Reversieren nicht mehr unmittelbar durch das Ausziehen des Bohrers beim Zurückfahren der gesteuerten Vorschubeinheit ausgelöst, sondern über ein gesondertes Antriebsglied, das seine Energie auch nicht aus der Auszugsbewegung selbst bezieht, sondern pneumatisch oder gegebenenfalls auch elektrisch angetrieben ist.

Bei allen Gewindeschneidapparaten ist dabei üblicherweise vorgesehen, dass das Umschaltsignal von der Maschinensteuerung kommt, was abgesehen von der relativ komplizierten Anordnung, die zur Überleitung dieses Signals an den abkuppelbaren Gewindeschneidapparat auch zu unterschiedlichen Schaltzeiten führt, wodurch die Genauigkeit beim Gewindebohren negativ beeinträchtigt wird.

Der Erfindung liegt daher die Aufgabe zugrunde, einen Gewindeschneidapparat der eingangs genannten Art so auszugestalten, dass die Umschaltsteuerung schneller und exakter schaltet und dadurch die erzielte Gewindetiefengenauigkeit erhöht ist.

Zur Lösung dieser Aufgabe ist erfindungsgemäß vorgesehen, dass am bzw. im Gehäuse des Gewindeschneidapparats ein elektro-pneumatisches Ventil zur Betätigung des Pneumatikzylinders angeordnet ist, und dass das das Ventil ansteuernde Stellglied ein am Gehäuse befestigter Sensor zur direkten Erfassung des Spindelauszugs ist.

Durch diese Ausgestaltung, wobei der Sensor bevorzugt ein Induktiv-Sensor sein kann, befindet sich die komplette Umschaltsteuerung am Gewindeschneidapparat, was zur Folge hat, dass sie sehr schnell und exakt arbeitet. Hierzu trägt auch die unmittelbare Erfassung des Spindelauszugs über den Sensor bei, die ein sehr viel rascheres genaueres Erfassen des Spindelauszugs gestattet als dies über eine Anbindung mit der Maschinensteuerung möglich ist.

Hinzu kommt noch, dass durch die Anordnung der kompletten Umschaltsteuerung am Gewindeschneidapparat ein solcher Gewindeschneidapparat bei beliebigen Werkzeugmaschinen Einsatz finden kann, und es nicht darauf ankommt, dass in der Werkzeugmaschine entsprechende Vorkehrungen zur Ansteuerung der Umschalteinrichtung im Gewindeschneidapparat vorgesehen sind. Die Kompatibilität ist also beträchtlich erhöht.

Mit besonderem Vorteil kann dabei in Ausgestaltung der Erfindung vorgesehen sein, dass am Gehäuse des Gewindeschneidapparats ein Luft- und Stromanschlussteil zum Betrieb des Ventils und des Sensors befestigt ist, das bei der Montage des Gewindeschneidapparats an der Spindelaufnahme einer Werkzeugmaschine automatisch an einen daran befestigten Anschlussversorgungsblock elektrisch kontaktierend und unter Freigabe der Druckluftzufuhr andockt.

Durch diese Ausbildung bedarf es keiner umständlichen Montagearbeiten zum Anschließen einer Hydraulikleitung an den Gewindeschneidapparat und zum Anstecken der Stromversorgung. Dies erfolgt automatisch beim Befestigen des Gewindeschneidapparats an der Maschinenspindel der Werkzeugmaschine und noch dazu ohne dass die Leitungen wie bei bisherigen Direktanschlüssen am Gewindeschneidapparat frei herumhängen und beim Betrieb des Gewindeschneidapparats stören können.

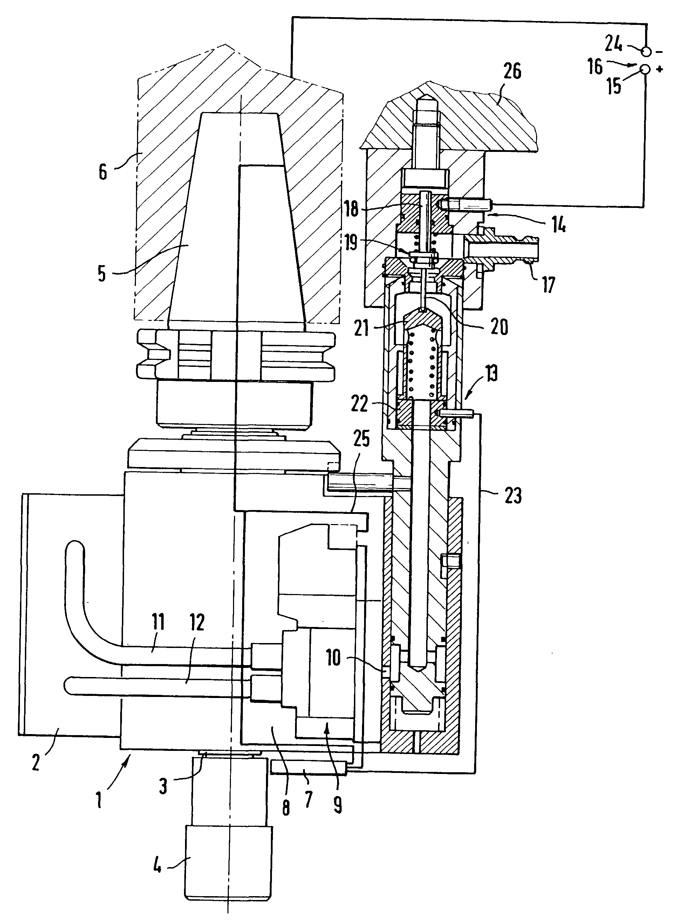

Weitere Vorteile, Merkmale und Einzelheiten der Erfindung ergeben sich aus der nachfolgenden Beschreibung eines Ausführungsbeispiels sowie anhand der Zeichnung, die einen schematischen Schnitt durch einen erfindungsgemäßen Gewindeschneidapparat mit Drehrichtungsumkehr darstellt.

Der innere Aufbau des Gewindeschneidapparats 1 mit dem Planetengetriebe und der Art der Verbindung des die Drehrichtung umschaltenden Pneumatikzylinders 2 mit diesem Planetengetriebe sind nicht Gegenstand des vorliegenden Patentbegehrens und deshalb in der Zeichnung nicht im Einzelnen dargestellt. In der Zeichnung erkennt man die ausziehbare Spindel 3 des Gewindeschneidapparats mit dem Spannkopf 4, die in Verbindung steht mit dem Schaft 5 zur Aufnahme in der Maschinenspindel 6 einer Werkzeugmaschine. Zur Erfassung des Auszugs der Spindel 3 und damit zur Erfassung des exakten Zeitpunktes, an dem die Umschaltung der Drehrichtung des Planetengetriebes zum Antrieb der Spindel 3 erfolgen muss, dient ein Induktiv-Sensor 7, der unmittelbar am Gehäuse 8 des Gewindeschneidapparats 1 befestigt ist. Im Gehäuse 8 ist darüber hinaus ein elektro-pneumatisches Ventil 9 angeordnet, welches die von außen über eine Gehäuseanschlussöffnung 10 zugeführte Druckluft auf die beiden Ansteuerleitungen 11 und 12 für die beiden Kammern des Pneumatikzylinders 2 nach Maßgabe des Umschaltsignals vom Induktiv-Sensor 7 verteilt. Zur Luft- und Stromzufuhr ist ein Luft- und Stromanschlussteil 13 unmittelbar an das Gehäuse des Gewindeschneidapparats 1 seitlich angebaut, das bei der Montage des Gewindeschneidapparats an die Werkzeugmaschine, also beim Einziehen des Schafts 5 in die Maschinenspindel 6 automatisch an einem Anschlussversorgungsblock 14 andockt, der mit dem einen Pol 15 einer äußeren Stromversorgungsquelle 16 und über einen Stutzen 17 mit einer äußeren Druckluftquelle verbunden ist. Über den Stößel 18 des Druckluftventils 19 im Anschlussversorgungsblock 14 sowie einen damit verbundenen Betätigungsstift 20 wird die elektrische Stromverbindung zum Kolben 21 eines Ventils am Stromanschlussteil 13 weitergegeben, von wo aus in der in der Zeichnung gezeigten Öffnungsstellung die elektrische Verbindung zu einem Begrenzungsanschlag 22 über eine Druckfeder 27 hergestellt ist, von dem ein Stromversorgungsdraht 23 in das Gehäuse 8 des Gewindeschneidapparats geführt ist. Die engschraffierten Teile des Stromanschlussteils 13 und des Anschlussversorgungsblocks 14 sind metallisch und damit elektrisch leitend, während die anderen Teile Isolatoren sind. Der zweite Pol 24 der äußeren Stromquelle 16 ist also Massepol unmittelbar an das Maschinengehäuse gelegt und gelangt auf diese Art und Weise über die Leitung 25 an das elektro-pneumatische Ventil 9.

Der Anschlussversorgungsblock 14 ist an das Maschinengehäuse 26 der Werkzeugmaschine seitlich neben der Maschinenspindel 6 angeschraubt.

## Patentansprüche

1. Gewindeschneidapparat mit Drehrichtungsumkehr und einem Planetengetriebe, bei dem die Drehrichtung eines im Spannkopf einer gegen eine Längenausgleichsfeder ausziehbaren Spindel gehalterten Bohrers nach Erreichen einer vorgegebenen Bohrtiefe über einen Pneumatikzylinder umgeschaltet wird, der von einem über ein Stellglied erzeugten Umschaltsignal betätigbar ist, dadurch gekennzeichnet, dass am bzw. im Gehäuse (8) des Gewindeschneidapparats (1) ein elektro-pneumatisches Ventil (9) zur Betätigung des Pneumatikzylinders (2) angeordnet ist, und dass das das Ventil ansteuernde Stellglied ein am Gehäuse (8) befestigter Sensor (7) zur direkten Erfassung des Spindelauszugs ist.

2. Gewindeschneidapparat nach Anspruch 1, dadurch gekennzeichnet, dass der Sensor (7) ein Induktiv-Sensor ist.

3. Gewindeschneidapparat nach Anspruch 1 oder 2, dadurch gekennzeichnet, dass an seinem Gehäuse (8) ein Luft- und Stromanschlussteil (13) zum Betrieb des Ventils (9) und des Sensors (7) befestigt ist, das bei der Montage des Gewindeschneidapparats (1) an der Spindelaufnahme (6) einer Werkzeugmaschine automatisch an einen daran befestigten Anschlussversorgungsblock (14) elektrisch kontaktierend und unter Freigabe der Druckluftzufuhr andockt.
